# EUROPEAN PATENT SPECIFICATION

(11) **EP 4 197 939 B1**
(45) Date of publication and mention of the grant of the patent: **20.05.2026**
(21) Application number: 21215741.6
(22) Date of filing: 17.12.2021
(51) Int. Cl.: B65G 1/04, B65G 1/16, B65G 1/137

(54) **STORAGE SYSTEM COMPRISING STORAGE BUILDING AND DATA PROCESSING SYSTEM**
SPEICHERSYSTEM MIT SPEICHERGEBÄUDE UND DATENVERARBEITUNGSSYSTEM
SYSTÈME DE STOCKAGE COMPRENANT UN BÂTIMENT DE STOCKAGE ET UN SYSTÈME DE TRAITEMENT DE DONNÉES

(43) Date of publication of application: 21.06.2023
(73) Proprietor: Menut, Damien, 1209 Genève (CH); Fontana, Mathias, 1174 Luins (CH)
(72) Inventor: Menut, Damien, 1209 Genève (CH); Fontana, Mathias, 1174 Luins (CH)
(74) Representative: Schneiter, Sorin

(56) References cited:
- WO-A1-2016/166294
- WO-A1-2017/217920
- CA-A1- 3 085 073
- GB-A- 2 558 798
- US-A1- 2005 144 194
- US-A1- 2007 065 259
- US-A1- 2020 071 075
- WESTFALIATECHINC: "Automated Self Storage Driven by Westfalia ASRS", 6 January 2012 (2012-01-06), XP055975064, Retrieved from the Internet <URL:https://www.youtube.com/watch?v=vD2a59a-jbc&ab_channel=WestfaliaTechInc> [retrieved on 20221026]

## Description

### Technical Field

The present invention generally relates to the field of storage locations and to an automated storage system and building.

### Background Art and Problems Solved by the Invention

When letting storage space to users, costs in combination to ease of access and proximity of the storage location are central aspects. In more populated and/or economically more active areas, the costs of ground are higher, which consequently increases the rental or acquisition costs of storage space. One solution might be the constructions of multi-storey buildings, but also in this case a significant amount of surface area is lost due to providing access ways in the form of staircases, elevator shafts, corridors, and so forth to an individual's user storage space in a building. Such access ways also require surveillance. Furthermore, the construction of multi-storage buildings are higher.

US 8,260,454 B2 discloses a solution to this problem by providing an automated storage system, which comprises a multi-story steel building having a simplified construction plan, as containers are stored at various locations and stories, and are delivered automatically by a delivery system to a common access location for direct access by a user. This solution makes it possible to save space that is otherwise lost in the form of internal access ways. On the other hand, this system presents several inconveniences. First of all, the system requires users to access the storage location and to wait until the corresponding container has been transported from a storage location to the access location. Second, the delivery system disclosed in this document involves a trolley system, carts with support trays and a hoist system, which renders the delivery of a container to a common access location relatively slow. In addition, this teaching is silent with respect to the rapid removal of containers into and away from the system, for example in case a user moves to another location. A more universal, standardized system would allow a user to use the same storage principle at different locations. More importantly, in accordance with US 8,260,454 B2, a multi-story construction is still required in order to increase available storage space.

WO 2017/217920A1 discloses a storage system according to the preamble of claim 1 and a car park, in which cars are driven into particularly designed containers and are then stacked by an overhead crane installation until the driver wishes to recover the car. GB 2558798A discloses a robotic storage system comprising containers stacked within a particular frame structure having vertical uprights and horizontal grids. CA 3085073 discloses a robotic parking device and handling method. WO 2016/166294 discloses an object handling system, where objects are bins that can be transported by a trailer.

The present invention addresses the problems depicted above. Further objectives and problems addressed by the present invention will become apparent from the description of the aspects and embodiments of the invention herein below.

### Summary of the Invention

The invention provides a storage building comprising a storage area; a plurality of containers provided in said storage building on said storage area, each container having a container door; wherein said containers may be stacked to form stacks of containers on said storage area, and wherein one or more containers are associated with an individual user and contain said storage space of said individual user; said storage building further comprising: one or more user access gate provided to allow an individual user to access to the storage space provided in the inside of a container; an access area provided behind each of said one or more user access gate, sufficiently large for allowing a container to be placed behind said user access gate for allowing an individual user to access to said storage space in said container.

The invention provides a storage system comprising the storage building of the invention and further comprising a data processing system configured to be able to drive said crane automatically so as to transport said given container from a storage position to an access area; wherein said data processing system comprises user profiles of said users, comprising information on the one or more containers associated with each individual user; an interface that can be activated by an individual user via a mobile appliance and/or via the internet.

The invention provides a storage system comprising the storage building of the invention and further comprising a data processing system configured to interact with an individual user via said interface in a secured manner so as to allow the individual user to schedule an access date and time allowing the individual user to access the storage space contained in a container associated with said individual user.

According to the invention, said storage building comprises a crane for seizing a given container at the top of said container and for transporting said container from a storage position to said access area.

Further aspects and preferred embodiments of the invention are defined herein below and in the appended claims. Further features and advantages of the invention will become apparent to the skilled person from the description of the preferred embodiments given below.

### Brief Description of the Drawings

**Figure 1** is a schematic sectional view according to A-A in Fig. 2 of a storage building according to an embodiment of the invention.
**Figures 2** is a schematic top-down view of a storage building according to the embodiment shown in Fig. 1, showing sections A-A and B-B of the view in Figs 1 and 3, respectively.
**Figure 3** is a schematic sectional view according to B-B in Fig. 2 of a storage building according to an embodiment of the invention.
**Figure 4** is a schematic front elevational view of a storage building according to the embodiment shown in Figs 1-3.
**Figure 5** is a schematic top-down view illustrating the operation of the system in accordance with an embodiment of the invention.
**Figure 6** is a front elevational view to an open access gate of the storage building in accordance with an embodiment of the invention.
**Figure 7** is a schematic view illustrating the storage system in accordance with an embodiment of the invention, including the data processing system.

Hereinafter, preferred embodiments of the storage system and the storage building of the invention are described, in order to illustrate the invention, without any intention to limit the scope of the present invention.

### Detailed Description of the Preferred Embodiments

The present invention provides a storage system comprising a storage building. The storage system comprises a data processing system, which manages and/or controls several parts of the operation of the storage system, in particular the access of users to the storage space in one or more containers, the containers being stored in said storage building.

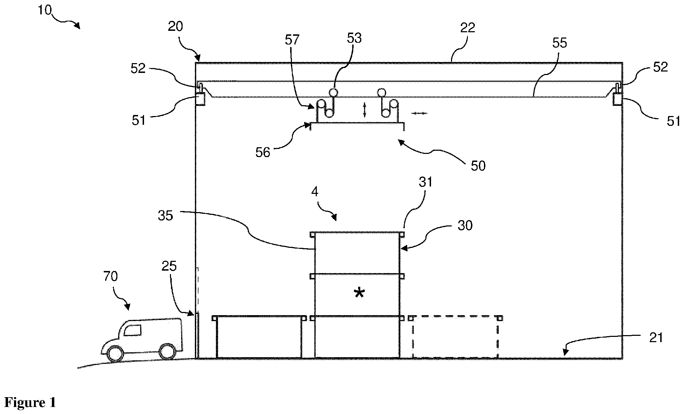

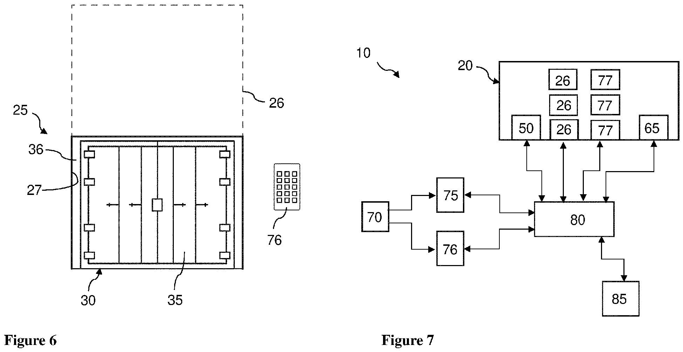

Figures 1 to 6 show the storage building 20 or parts thereof, while Figure 7 illustrates the storage system, including the data processing system 80, according to preferred embodiments. The storage building 20 is preferably a single-story building, which is preferably in the form of a storage hall. The invention does not exclude multi-story buildings, but preferably a storage area or space is preferably single-story and/or at ground level. In accordance with the invention, storage containers are preferably stacked during storage, such that a single-story building or stockage are or space can be used in three dimensions to increase available storage volume in the absence of multiple-storeys. In this manner, the overall costs for the construction of the building and for the storage volume can be significantly reduced in comparison with solutions relying on multiple storeys.

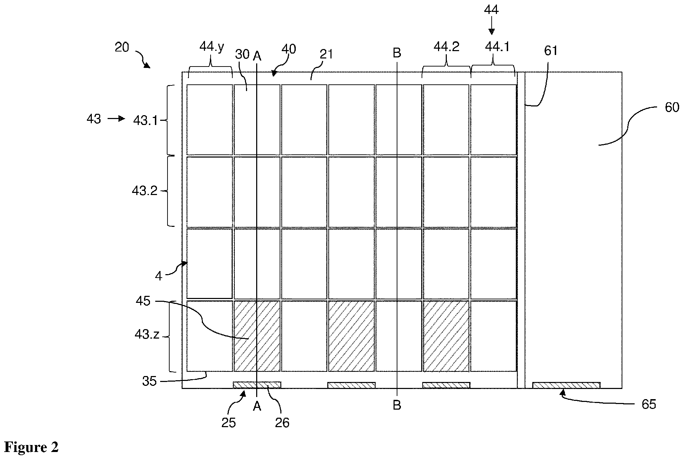

The storage building 20 preferably comprises a base level 21 defining a storage area 40 and access area 45. As can be seen in Fig. 2, part of the area of the base level 21 is preferably defined as a separate loading area 60, having a defined function, as will be described in more detail elsewhere in this specification.

In the storage area 40, containers 30 are stacked one above each other, so as to form stacks 4 of containers 30 (Fig. 1). Preferably, the building 20 is sufficiently high so as to house stacks comprising two or more, preferably three or more, even more preferably four or more containers 30.

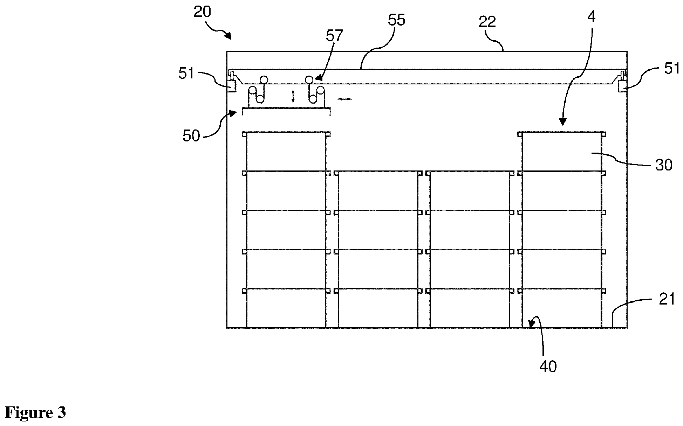

In a preferred embodiment, said storage building 20 comprises stacks 4 comprising three or more containers 30 stacked one on top of another on said storage area 40. In an embodiment, the building may be sufficiently high to be able to harbour stacks of 3, 4, 5, or more containers. In Fig. 3, the stacks with 5 containers are illustrated.

The containers 30 have preferably a substantially parallelepiped and/or cuboid shape. Preferably, the containers have a length, a width and a height defining the six sides of the container. Preferably, the container has rectangular longitudinal top and bottom and two lateral sides, and two preferably substantially square front and back sides. The front and back sides are preferably the sides that have the smallest surface among the six sides of the container.

The containers 30 are standard (or ISO) shipping containers, according to norm ISO 668. Preferably, the containers are standard containers selected from standard 10', 20', 30', 40', 40' high cube and 45' high cube containers. It is noted that these containers are further standardized in that they allow stacking, for example due to the standardized corner casting as defined in the norm ISO 1161. In another embodiment, the container is of another type, but preferably still standardized, so as to allow the stacking of the containers in a preferably safe manner.

For example, the container is a standard ISO 20' container, having standardized external dimensions of 6.06m (length), 2.44m (width) and 2.59m (height). In this case, the top and bottom sides have surfaces of about 6.06m*2.44m=14.79m², the lateral sides have surfaces of about 6.06m*2.59m=15.70m², and the front and back sides have surfaces of about 2.44m*2.5m = 6.1m².

The use of such standardized containers renders the storage system of the invention universally usable, and facilitates the use by clients who wish to transport their stored goods from one geographical area to another area, for example from one country to another. The containers used for shipment can directly be implemented in the storage system of the invention. Standard or ISO containers can be transported conveniently using an internationally used system of trailers for lorries. The trailers are preferably adapted to have the container attached via standardized locks.

The standard containers preferably comprise a front door 35 (Fig. 6). A door is preferably present at one or both selected from the front and the back side of the container. Standardized containers generally comprise a standardized cargo door (S2 door), but the door can be changed so that the container may be provided with a different type of door. Exemplary doors that can be used as container doors 35 include S1 doors (one locking bar per partial door on one side of the container), the above mentioned S2 doors (two locking bars per partial door), S4 or roller shutter doors, and S5 or personnel doors, for example. Furthermore, the container may be provided with bespoke doors, which are generally provided in the container, in additional to the main door 35.

In a preferred embodiment, the containers 30 preferably comprise the standardized corner casting and/or rims 31, on top and/or bottom borders of said containers, wherein said rims and/or corner castings are provided to allow for preferably stable stacking of said containers.

In a preferred embodiment, the containers 30 preferably comprise top rims 31 and/or corners on top borders of said containers, said top rims being provided for allowing said crane to stably grip said containers at said top rims so as to lift and transport said containers.

Preferably, the entire building and at least the storage area is realized on the basis of the external container dimensions, so that a predetermined number of lines and columns of containers can be stored, and a predetermined number of containers can be stacked in the building. For example, as shown in Fig. 2, the storage area 40 is conceived to be able to accommodate four rows 43 and seven columns 44 of containers 30. In the embodiment shown in Fig. 3, for example, the height of the building 20 is conceived to accommodate stacks 4 of containers 30 containing up to five stacked containers.

In a preferred embodiment, the storage area 40 is defined or structured as a rectangular array of juxtaposed and/or continuously arranged rows 43.1, 43.2, ... 43.z, and columns 44.1, 44.2, ... 44.y of standardized containers, for example when seen in a top-down view as shown in Fig. 2. The integrals z and y define the number of columns and rows of the array in the storage area. In the embodiment shown in Fig. 2, z = 4 and y = 7.

The rows and columns preferably define rectangular areas having preferably constant dimensions suitable to accommodate the containers, while accounting for a certain play required for the transportation and manipulation of containers in the building. Accordingly, the rectangular areas cover a surface corresponding to at least the width times the length of the containers, preferably some centimetres or decimetres more on the sides, so as to provide the place required for warranting safe transportation by the storage system of the invention.

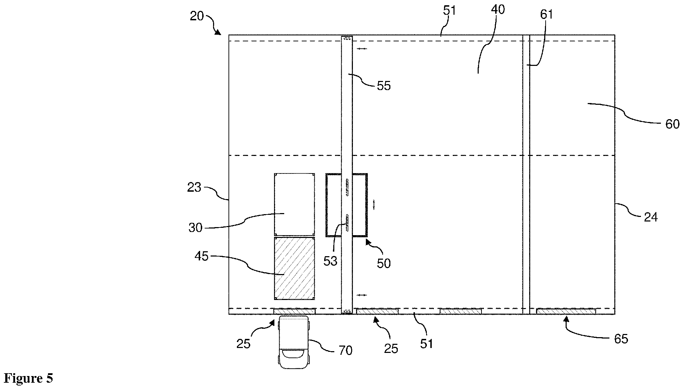

As also visible in Fig. 2, some areas 45 of the array of rows and columns, shown as shaded areas in Figs 2 and 5, generally not occupied by containers for the purpose of storage storage. These areas are access areas 45, which are provided on the ground level 21 in the building directly behind user access gates 25. At the date and/or time scheduled by an individual user, the storage system will place a particular container associated with the individual user on the access area 45. In order to optimize the surface utilisation, the access area 45 defines an area that is equal to the areas of the rows and columns 43, 44, provided to allow containers to be stored.

As has been mentioned, the storage building is sufficiently high to allow at least two containers being stacked one above the other, but preferably stacks 4 with three containers or higher stacks may be accommodated.

The stacks are placed on predetermined, rectangular areas arranged in rows and columns. Therefore, any one of the available storage positions for a container in the building can be specifically identified by three values, such as, for example row number, column number and number in the stack from the bottom. Preferably, each container storage position or space can thus be identified by parameters, such as the three variables X (e.g. column), Y (e.g. row), Z (number in stack), which variables, taken together, preferably define any storage position within the three-dimensional space inside the building. To make an example, the container marked with an asterisk (*) in Fig. 1, occupies the storage position 6-3-2 (column 44.6, row 43.3, no. 2 in stack, see also Fig. 2) in the storage building.

The storage system 10 and in particular the building 20 comprises a crane 50, which is provided for transporting containers from a storage position in the storage area 40 to an access area 45. The crane 50 is also provided for stacking containers 30 and for re-positioning containers throughout the storage area. The crane 50 is also provided for transporting containers from the loading area 60 to place in the storage area 40 and vice versa. In particular, the crane is provided for directly gripping and picking up a container on a lorry that has entered the loading area 60 (Figs 2 and 5) through the lorry access gate 65. Inversely, the crane 50 is provided for transporting a container from a storage area 40, for example from a stack 4 of containers in the storage area to the charging part of a lorry or truck in the loading area 60.

The crane 50 is preferably provided for picking up containers at their top, in particular at a corner or rim 31 provided at the top of the containers, including standard containers. The crane 50 preferably uses or comprises two lateral rails 51, a transversal rail 55 guided by the lateral rails, a trolley 53 guided by the transversal rail, a lifting block 57 comprising cables connected to the trolley, and a gripping device 56 connected to one or more cables of the lifting block.

The rails 51 are considered to be part of the overall crane or crane assembly 50. In the embodiment shown, the rails extend substantially in parallel, as shown in Figs 1 and 5. The rails are preferably provided towards the top side, in proximity to but below the roof 22 of the building 20. The two rails preferably extend substantially along two sides or walls of the building, which in the embodiment shown are the entire front and back sides of the building, respectively so as to extend along a distance that covers the entire storage area 40 and preferably at least part of the loading area 60. Of course, the rails could also extend along the side walls 23, 24 of the building, or be otherwise provided so as to extend in parallel.

The crane further comprises a transversal rail 55, which is perpendicular to the lateral rails 51, and which comprises, at its two extremities, wheels 52, which are guided in said lateral rails. The crane further comprises motors (not shown) for propelling the wheels, such that the transversal rail 55 can move along the distance of the two lateral rail and can, in the embodiment shown, preferably extend from the left to the right lateral sides 23, 24, respectively, of the building, by rolling on the two lateral rails.

The crane 50 further comprises a trolley 53, which is comprises wheels and which is guided on the transversal rail 55. Again, a motor, preferably an electric motor, is provided to allow the trolley 53 to move in any desired direction on the rail, as illustrated by the double-headed arrow in Fig. 5, and the horizontal double-headed arrow in Fig. 1.

The crane further comprises a gripping device 56, provided to grip a container, preferably from above, preferably at the top corner or rim 31 of the container.

Furthermore, the crane comprises a lifting block 57, which is attached to the trolley 53 and which comprises one or more cables connected to the gripping device 56. The purpose of the lifting block is to lower and raise the gripping device 56, for moving containers seized by the gripping device in vertical directions, as indicated by the vertical double headed arrow in Fig. 1.

As can be understood from the way the crane 50 is provided in the building, the crane 50 is suitable to grip, lift and transport any container 30 provided in the storage area 40 and to displace it, for example to transport it to another place in the storage area, including the access area 45. The crane is further provided to move containers from an area to a stack and to stack and to unstack containers. Preferably, the crane 50 is also provided for transporting containers from the loading area 60 to the storage area 40, and vice versa. Since the crane 50 is under the control of the data processing system 80, the latter is able to drive the just described transports of containers.

According to the invention, the building further comprises a lorry access gate 65, sufficiently large to allow, when open, a lorry caring a container 30 to enter said building and to access a loading area 60 in said building, wherein said loading area 60 is enclosed and separate from said storage area 40.

In a preferred embodiment, the said van or lorry access gate 65 is larger than said one or more user access gate 25.

In a preferred embodiment, both, the storage area 40 and the loading area 60 are provided basically on the ground or base level 21 of the building 20. As can be seen in Fig. 2, a separation wall or fence 61 is provided in the building to separate the loading area 60 from the storage area 40 within the building and to prevent access by individuals via the loading area to the storage area.

As mentioned, the containers 30 are preferably standard shipment containers. Accordingly, the lorry access gate has preferably dimensions that are sufficiently large to allow a lorry with trailers carrying a standard (or ISO) container to enter the loading area 60 through the gate 65. Trailers for standard containers typically use standardized ISO container twistlocks. These are standard-sized fixings used throughout the world. Upon release of the twistlocks, for example by the delivery person and/or lorry driver, the crane 50 can seize the container on the trailer and transport it from the lorry in the loading area 60 to the storage area 40.

The invention is about providing storage space to users. The user preferably rents or possibly buys the storage space. The user may be a physical person or a moral person, but access is in principle provided to physical persons, which may thus be representatives of the moral person.

The storage space is the space in the inside of a container 30. Accordingly, one or more containers 30 are associated with and/or attributed to an individual user. The storage system of the invention is provided such that an individual user can access the one or more container associated with the user, as will be described further below.

The storage building 20 is preferably provided with one or more user access gates 25 (Fig. 2, 4, and 6). For the purpose of definition, the front side of the building 20 is defined as the side where the one or more access gates are provided, while the opposed side is the backside of the building. Of, course, user access gates may in principle be provided at different sides, including the backside of the building, so that access can be provided from both sides. This may be an advantage if user access frequency is elevated and thus a larger number of access gates 25 is preferable.

In the embodiment of Fig. 3, the building 20 comprises three user access gates 25, and one lorry access gate 65. The lorry access gate is provided for allowing entire containers to get in and out of building. Individual users are normally not allowed, by the system of the invention, to access the building via the lorry access gate 65. The building 20 may comprise more user access gates, for example 1-100, preferably 2-20 and most preferably 3-15 user access gates.

As can be seen, the building comprises predefined areas 45, which allow the positioning of a container thereon, and which areas are provided directly behind each of the user access gates 25. Therefore, the building preferably comprises a number of access areas 45 that is equal to the number of access gates 25. These areas are access areas, as a container is placed on that area when an individual user wishes to access the corresponding container 30, which is associated with the user. In this case, the system of the invention drives the crane 50 so as to move the corresponding container from a storage position of the container, generally in a stack 4 of containers, to the access area.

In a preferred embodiment, said one or more user access gate 25 comprises a motor (not shown) and a gate door 26 under control of said motor, wherein said data processing system 80 is provided to control said motor so as to open and/or close said gate door 26. The data processing system will be described in more detail elsewhere in this specification.

In accordance with the storage system, the gate door 26 can be opened once the container 30 is placed on the access area behind the corresponding gate door. The user may then approach the front door 35 of the container, can open the door and can access the inside of the container. The user may wish to access the container for depositing goods or for retrieving goods, including personal property and the like. Once the individual user has completed the visit of the container, the user closes the container door 35. In a subsequent step, the gate door 26 is closed by the system 10 of the invention.

In a preferred embodiment, said one or more user access gate 25 provides an opening 27 (Fig. 6) when a gate door 26 of said user access gate is opened, wherein a dimension of said opening is such that a distance defining a gap 36 between a border of said opening 27 and a container placed on said access area is 15cm or smaller, preferably 10 cm or smaller, most preferably 5 cm or smaller.

Preferably, the opening provided by the opened user access gate 26 is closely adjusted to the dimension of the container door 35 and/or or to the side of the container comprising the container door (here: the front side of the container). In particular, once the container 30 is placed on the access area 45 behind the access door and with the gate door 26 being opened, the opening of the user access gate does not allow the user to pass beside the container 30 and enter the storage area 40 behind the access gate. The user access gate 25 exclusively allows access to the container door 35 and to the inside of the container following the opining of the container door. Since the system of the invention is automated and secured, users are not given access to the storage area 40, or to the inside of the building in general.

Preferably, the dimensions of the opening 27 defined by the opened user access gate 25 is such that the container door 35 can be opened, but that a user cannot enter the building with the container being positioned on the user access area. More preferably, even a child that may potentially accompany the user cannot enter the building via the user access gate, barred by the container, and in particular the front side of the container.

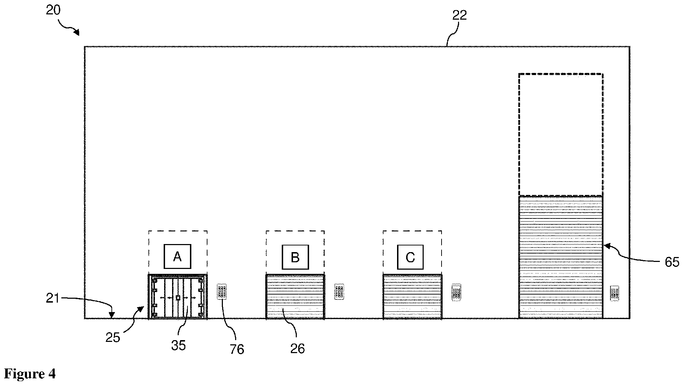

In a preferred embodiment, the gate door 26 is selected from sliding doors and tabour doors. Preferably, the gate door allows the opening of said gate door when said container is placed on said access area 45 in close vicinity, in particular immediately behind, said user access gate 25. Preferably, the gate door is an automated door, which is provided for being opened and closed automatically by the storage system. In Figs 4 and 6, dotted lines indicate the position of liftable sliding doors when the respective gate is open.

In Fig. 1, the user is exemplified by a car or van 70, placed on a parking place in close vicinity to the access gate 25, on the outside of the building. Preferably, the parking place is provided at the same level as the base level 21 of the building, such that the access area 45 is provided at the same level as the parking level, too. This facilitates loading and/or unloading of goods into and out from a particular container placed on the access area 45.

The building 20 preferably defines a space inside that is reserved for taking containers into and out from the building. This space is shown as loading area 60. The building 20 preferably comprises a lorry (or truck) access gate 65, by which a lorry loaded with a container can access the loading area 60. Preferably, the lorry access gate 65 is larger than the one or more user access gates 25. Preferably, the crane 50 is provided so as to be able to move to the loading area and to grip a container on a lorry, and to transport the container from the lorry (or the trailer of the lorry) to a storage position in the storage area, for example in a stack 4. Similarly, the crane can pick up a container in the storage area 40 and load it onto a lorry in the loading area 60, for example.

With the main components of the storage building 20 having been described, the storage system 10 and its operation can now be described with reference to Figure 7.

The storage system 10 comprises a data processing system 80, which is provided to run computer codes and/or algorithms required to operate the storage system 10. In particular, the data processing system 80 runs the movements of the crane 50 and the gate doors 26 of the user access gates 25. In an embodiment, the data processing system 80 also controls the lorry access gate 65.

Accordingly, the data processing system 80 can open and/or close user access gates 25, can transport the containers as described by controlling the crane 50, and can also open and/or close the lorry access gate 65.

In a preferred embodiment, the storage system 10 comprises an interface 75, by which individual users can interact with the storage system, and can in particular schedule an access date and time for accessing their storage space.

The interface 75 may be a program run on a mobile appliance belonging preferably to the user or may be a website or web-based interface in general. For example, the interface 75 may be an application that is run on a mobile appliance selected from a mobile phone, a computer tablet, or a computer in general. The user preferably owns the mobile appliance or has otherwise access to it. If the interface 75 is provided on a website or webserver, the user may access the interface via the internet, again via a computer or mobile appliance as mentioned above.

The data processing system 80 is configured to interact with said individual user via said interface 75 in a secured manner so as to allow the individual user to schedule an access date and time allowing the individual user to access the storage space contained in a container associated with said individual user.

Preferably, the data processing system 80 comprises (or has access to) a database on which profiles of users are stored.

The user profiles preferably comprise unique user identifiers as well as one or more containers associated with each individual user. Accordingly, each container in the storage building is given a unique identifier, too. Preferably, each user is further associated with a security feature, such as a password, smart card, security certificate, personal mobile phone number, and combinations thereof. Preferably, only a user that is registered in the system and who has one or more containers associated with the user (for example, rent by the user) can log into the system 80 and schedule a visit date and time. Furthermore, any specific user can only access the particular containers associated with the user.

In a preferred embodiment, the data processing system 80 is configured to manage the scheduling of the access times and/dates of different users to particular access gates.

If an individual user wishes to access the storage space associated with that individual user, the user schedules a visit via the interface 75. The date processing system, which communicates with the interface, will in particular check the user identity and the security feature before allowing a user to schedule a visit.

Each visit by an individual user preferably encompasses a date and time of arrival and a time of departure, generally on the same date, but possibly on the next day. Accordingly, each visit generally defines an individual and/or unique time window, within which the user can access a container of the user's storage space. The data processing system 80, via its computer codes and algorithms, checks if an access area 45 is available at the time window a user has entered via interface 75. If so, the system 80 will confirm the scheduled visit. If there is no access area available at the scheduled time, or if the system 80 is aware that it not manage to timely place the corresponding container to the access area at the time window, the system 80 will propose another time window via interface 75, or will let the user define another time window. Once an available and workable time window has been determined, the system 80 will confirm the time window via interface 75, and will control the crane 50 so that the particular container selected by the individual user is placed on the access area 45 at the scheduled time window.

In case there are several different access gates in the same building (as shown in Figs 2 and 5), the system 80 will also indicate to the user the particular access gate where the individual user will be able to access his/her container. This is typically a gate number or other identifier (color, letter) that is indicated at the building. In Fig. 4, user gate identifiers A, B and C are shown.

It is noted that the system 80 is configured to prepare the scheduled visits (scheduled access date and time) in advance. Preferably, the system uses the crane 50 to position a particular container at the appropriate access area 45 ahead of the access date and time. In addition, the system 80 may take into account a plurality of scheduled accesses, generally scheduled by different users, and may thus plan, project and/or prepare said scheduled accesses. For example, in case several accesses are scheduled within a relatively short time interval, the system 80 may place different containers to be visited in vicinity of an appropriate access gate, or may use the crane to place the containers to be visited on the top of different stacks 4 in the building, so that the containers to be accessed soon can be rapidly seized and be timely placed on the appropriate access area.

In order to gain time, the system 80 is configured to prepare the scheduled accesses during the night time and/or outside business times, preferably before the day of the scheduled accesses. Preferably, the system is configured to prepare the scheduled visits as described above at times where the costs for electricity are reduced. For example, costs of electricity may be reduced during night. In this manner, the costs for operating the system of the invention may be reduced by selecting the operation time of the crane, in particular when preparing and/or planning the scheduled visits.

Preferably, the system 80 comprises and makes use of optimizing algorithms, which are configured to minimize transport ways and/or electricity costs when transporting containers for executing the scheduled accesses.

Before opening the gate door 26 at the scheduled arrival time, the system 80 is configured to invite the user to confirm the user's presence in front of the gate. The system 80 may be configured to allow a user to confirm presence by one or both selected from the mobile appliance and thus via interface 75, or possibly in vicinity of or directly at the gate, for example by entering a code at an interface or electronic key 76 provided directly at the corresponding gate, or at a protected room or booth at the entry of the ground of the building (not shown). For example, confirmation may be required at a protected gate allowing entry to the ground of the building. In this case, once the user provides the appropriate confirmation, the gate to the ground of the building is opened, or a boom is lifted, like for accessing a parking site, for example.

Once the individual user has confirmed the user's presence at the gate at the scheduled arrival time, the system 80 opens the gate door 26 behind which the corresponding container of the user has been placed. The system 80 is configured to open the gate only if the corresponding container 30 has been positioned on the said access area 45 behind the particular, predetermined access gate, which has also been communicated to the user

The user can now open the container door 35 and access to the inside of the container for the scheduled time. The user may now load and/or unload items into and/or out from the container, respectively, or may inspect the contents of the container, for example. After completion of the user's visit, the user closes the container door 35. The user may now inform the system 80, again via the interface 75, about the termination of the visit and the system 80 may close the corresponding gate door 26. The system 80 is preferably configured to close the gate door 26 only in case the container door 35 of the container 30 placed on the access area 45 behind the corresponding gate has been closed by the user beforehand.

In a preferred embodiment, the storage system 10 and the data processing system 80 in particular are configured to implement one or more security features and/or checks, so as to ensure that the entire storage system and in particular the storage building 20 are safely operated.

In an embodiment, said storage area 40 and said access area 45 are inaccessible to users and preferably protected from access by any person during operation of the system 10. As has been described, each of the one or more user access gates 26 is configured to open only once a container is stored on the access area 45 behind the user gate and in the inside of the building. The dimensions of the user access gates and of the containers are such that the container placed behind the user access gate prevents any user from entering the building through the user access gate. Therefore, access via the user access gates to the inside of the building 20 and in particular to the storage area 40 is prevented, in particular for any individual user. Of course, during maintenance of the system, in particular during maintenance of the crane 50, access to personnel may be allowed under particular conditions, which is typically outside the normal operation of the storage system. By preventing access to the storage area 40, it is not only possible to warrant the safety of the users, but also to prevent malicious acts.

Furthermore, the building 20 comprises a wall, fence or other hindrance 61 delimiting and/or separating the loading area 60 from the storage area 40. Thus, an individual person present in the loading area 60 is preferably prevented from accessing the storage area. Again, this applies to in particular delivery persons (e.g. truck drivers) or users, but is not necessarily an absolute condition. For example, staff who is in charge with managing, servicing and/or monitoring the building and/or the system, for example, may have access rights and/or keys for accessing otherwise inaccessible parts of the building 20. Preferably, such access takes place only when the operation of the storage system is put on hold. During this time, the access by users to their containers via the user access gates is preferably temporarily suspended. Access to staff for maintenance, for example, is preferably enabled by separate accesses, such as typical doors that can be secured separately and which are not shown in the figures. Normal users of the system are not meant to have access to the building via such separate doors.

In an embodiment, the building 20 comprises closable and re-openable means 61 for separating the loading area 60 from the storage area 40. In an embodiment, the building comprises a door or gate (not shown) for closing the storage area 40. In case the crane needs to transport a container from and/or to the loading area 60, the door and/or gate can be opened by the system, in particular under the control of the data processing entity 80. In this manner it is possible to have a protected atmosphere (e.g. low oxygen) specifically in the storage area 40, for example.

In an embodiment, each access gate 25 and in particular each access area 45 behind the corresponding gate comprises a balance and/or scale 77 suitable to determine the weight of the container placed on the access area 45. The balance and/or scale 77 is connected with the data processing system 80 (Fig. 7), such that the latter knows the weight of the container placed on the access area.

In a preferred embodiment, the storage system 10 of the invention is configured to compare the weight of each container with a threshold value. The purpose of the threshold weight value is to make sure that the crane's 50 capacity to safely transport the containers within the building 20 are warranted and/or not trespassed. Furthermore, the container's weight may need to remain below a particular threshold so as to make sure that stacking of the containers is safely possible. In particular, a given container may only support a limit load to be stacked on top of it in the form of additional containers forming a stack, to make sure that the container withstands the load and/or does not get damaged.

Other purposes of determining the weight of the containers may not me linked directly to the security of the building and to the goods or other items stored in the containers. For example, it may be economically and energy-wise worthwhile storing comparatively heavy containers relatively towards the bottom of a stack 4 and to store comparatively light containers on the top of a stack. The system 80 is preferably configured to take the weight of the various containers into account when determining a strategy of forming stacks 4 of containers in the storage area 40.

In an embodiment, the storage system 10 comprises a balance or scale 77 provided at said one or more access area 45 so as to determine the weight of a container placed on said access area 45, and wherein said data processing system 80 is preferably configured to prevent said crane from transporting said container if the determined weight of the container is higher than a predetermined threshold weight.

As another example, the rental of storage space in the storage system 10 of the invention may be determined on the basis not only of storage volume (depending on the number of containers), but also or alternatively on the basis of the weight of the items or goods stored in the one or more containers. Typically, one would expect higher rental costs with increasing weight of the stored items or goods. This would reflect the fact that a heavier container is likely to cause higher energy-related costs due to the heavier weight to be lifted and transported when the container is transported within the building 20, for example when transporting the container to the access area 45 for the purpose of allowing the user to visit his/her storage space.

In an embodiment, the data processing system 80 is configured to produce an alert if said determined weight of the container is higher that a predetermined threshold weight, and to preferably send the alert to a user associated with said container. The system 80 is preferably configured to communicate the alert to the interface 75, or by sending any type of message, automated phone call, and the like, to the mobile phone of the user.

In a preferred embodiment, the data processing system 80 is configured to inform the user about the determined weight of the one or more containers 30 associated with the individual user. Preferably, the system 80 stores the weight of each container within the building within its database, preferably along with other data related to the user profile. Preferably, the user may access the weight of the one or more containers associated with the user while using the interface 75, for example by logging in to the system via the interface 75.

The access to the loading area 60 via the lorry access gate 65 is preferably not available to users 70, but is preferably managed separately. In an embodiment, the access to the loading area is also managed via an interface 85 (Fig. 7), which is preferably different from the user interface 75. The interface 85 is preferably reserved to be used by managing or servicing staff, or possibly by the container delivery staff, such as the lorry driver. Accordingly, the storage system preferably prevents an individual user from accessing the loading area. In an embodiment, one or more predefined transport companies or other entities can schedule time windows for entering the building through the lorry access gate 65 while also using identifiers associated with corresponding access rights.

The data processing system 80 automatically and actively controls and operates the access to the containers by users and preferably the access by lorries to the loading area. The data processing system 80 keeps a record of the containers stored in the building, and in particular stacked in the storage area 40. At any moment, the system thus has the information about all containers, their position in the storage area, if applicable, within a stack 4 of containers in the storage area. The system 80 also knows the weight of the containers, as this has been determined, for example, at the user access area. The system 80 preferably runs algorithms and/or codes for determining user access gates for a scheduled visit by a user, and to open and/close said user access gate.

The system 80 preferably runs algorithms and/or codes for driving the crane to transport containers withing the storage area, including the access area 45, as useful and necessary to operate the storage system 10. This is preferably done in an automated manner. Typically, the system 80 runs algorithms and/or codes for determining the ideal storage position of a container within the storage area and/or within a stack as a function of the containers weight and the frequency of visits of the container by a user, and possibly of the type of subscription an individual user has. Once an individual user schedules a time window for accessing a particular container associated with that user, the system will perform the unstacking and/or transporting of containers in the storage area as required to be able to transport the particular container to the access area 45 timely before the scheduled arrival date and time. For example, in case a particular container is stored at the bottom of a stack or close to the bottom, the system 80 will take into account the time needed to transport away the containers on top of the particular container so as to give access to that particular container before being able to lift the particular container to the access area. The security features of the invention make sure that the user access gate 25 is not opened unless all safety requirements are met, including the placement of the particular container on access area 45 associated with the predetermined user gate 25.

As has been mentioned above, the building 20 of the present invention preferably comprises a storage area 40, which is not accessible to users and, preferably not accessible to any person, including staff, during the operation times of the system of the invention. If one considers the access area 45 to be part of the overall storage area 40, one may say that only the access area 45 is accessible and only to the extent that a user may enter the container placed on that access area. During an access scheduled by a user, the opening 27 of the user gate is barred by the container, and the storage area, other than the inside of the container, is not accessible. Furthermore, the system is configured to prevent the opening of a gate 25 unless a container is placed on the access area 45 directly behind the corresponding gate.

The building and/or system is preferably provided to prevent access by any unauthorized person, including users, to the storage area. The access is preferably prevented by physical means, such as the access gate 25 being closed by door 26, or, when the door is open, a container 30 being placed in such a manner so as to only allow access to the inside of the container but not to any area in the building outside of the container placed on the access area 45.

In an embodiment, the part of the building covered by the storage area 40 may be characterized by a modified ambiance and/or a modified atmosphere. For example, the building of the invention comprises equipment that is suitable to reduce the oxygen content in the building and in particular in the storage area 40 and/or space of the building. In this manner, the risk of fire in the building may be reduced and/or the shelf life of perishables (food, medicaments) may be increased, in case such perishables are stocked in the building. In an embodiment, the temperature within the building is preferably also regulated by the system of the invention, in that the building comprises heating and/or cooling equipment, which can be controlled by the data processing entity 80.

While certain of the preferred embodiments of the present invention have been described and specifically exemplified above, it is not intended that the invention be limited to such embodiments. Various modifications may be made thereto without departing from the scope of the present invention, as set forth in the following claims. Herein below, examples of the invention are disclosed. These examples are for illustration only and are not intended to limit the scope of the present invention.

## Claims

1. A storage system (10) for providing storage space to users, the system comprising:
- a storage building (20) comprising a storage area (40);
- a plurality of standard ISO 668 shipping containers (30) provided in said storage building on said storage area (40), each container having a container door (35); wherein said containers may be stacked to form stacks (4) of containers on said storage area, and wherein one or more containers are associated with an individual user and contain said storage space of said individual user;
said storage building further comprising:
- one or more user access gate (25) provided to allow an individual user to access to the storage space provided in the inside of a container;
- an access area (45) provided behind each of said one or more user access gate (25), sufficiently large for allowing a container to be placed behind said user access gate (25) for allowing an individual user to access to said storage space in said container;
**characterized in that** the storage building (20) further comprises:
- a loading area (60) in said building, wherein said loading area (60) is enclosed and separate from said storage area (40),
- a lorry access gate (65), sufficiently large to allow, when open, a lorry caring a container to enter said building and to access said loading area (60);
- a crane (50) for seizing a given container at the top of said container and for transporting said container from a storage position to said access area (45), wherein the crane (50) is also provided for stacking containers (30) and for re-positioning containers throughout the storage area, and for transporting containers from the loading area (60) to said storage area (40) and vice versa;
said system (10) further comprising:
- a data processing system (80), configured to be able to drive said crane automatically so as to transport said given container from a storage position to an access area; wherein said data processing system comprises:
- user profiles of said users, comprising information on the one or more containers associated with each individual user;
- an interface (75) that can be activated by an individual user via a mobile appliance and/or via the internet;
wherein said data processing system (80) is configured to interact with said individual user via said interface in a secured manner so as to allow the individual user to schedule an access date and time allowing the individual user to access the storage space contained in a container associated with said individual user.

2. The system of claim 1, wherein said building has a base level (21), wherein said access area (45) is provided on said base level, wherein said one or more user access gate (25) are provided to give access to said base level (21), and wherein said one or more user access gate (25) and said access area (4) are provided so as to allow an individual user to access the inside of the container placed on the access area (45) via the container door (35) when said user access gate is open, but wherein said one or more user access gate (25) do not provide to said user any other access to said building.

3. The system of claim 1 or claim 2, wherein said storage area (40) and said access area (45) are inaccessible to users and preferably protected from access by any person during operation of the system.

4. The system of any one of the preceding claims, wherein said one or more user access gate (25) comprises a motor and a gate door (26) under control of said motor, wherein said data processing system (80) is provided to control said motor so as to open and/or close said gate door (26).

5. The system of any one of the preceding claims, wherein said gate door (26) is selected from sliding doors and tabour doors, so as to allow opening of said gate door when said container is placed on said access area (45) in close vicinity to said user access gate (25).

6. The system of any one of the preceding claims, wherein said one or more user access gate (25) provides an opening (27) when a gate door (26) of said user access gate is opened, wherein a dimension of said opening is such that a distance defining a gap between a border of said opening and a container placed on said access area is 15cm or smaller, preferably 10 cm or smaller, most preferably 5 cm or smaller.

7. The system of any one of the preceding claims , wherein said crane (50) is provided to transport a container from a van or lorry on said loading area (60) to said storage area (40), and preferably to storage position in a stack (4) of containers.

8. The system of any one of the preceding claims, wherein said van or lorry access gate (65) is larger than said one or more user access gate (25).

9. The system of any one of the preceding claims, wherein said storage building (20) comprises stacks (4) comprising three or more containers (30) stacked one on top of another on said storage area (40).

10. The system of any one of the preceding claims, wherein said containers comprise rims (31) on top and/or bottom borders of said containers, wherein said rims are provided to allow for stable stacking of said containers, and wherein said containers preferably comprise top rims (31) on top borders of said containers, said top rims being provided for allowing said crane to stably grip said containers at said top rims so as to lift and transport said containers.

11. The system of any one of the preceding claims, wherein said data processing system (80) comprises a code suitable to determine a user access gate (25) and to open said user access gate at the scheduled access date and time, and wherein said data processing system (80) preferably comprises a code suitable to control said crane to place, in an automated manner, said container associated with said individual user behind said determined user access gate (25) at or before said scheduled access date and time.

12. The system of any one of the preceding claims, wherein said data processing system (80) is configured to open a given user access gate (25) only once a container (30) is placed on said access area (45) behind said given user access gate.

13. The system of any one of the preceding claims, wherein said data processing system (80) is configured to close a given user access gate (25) only if the container door (35) of the container placed on said access area (45) behind said given user access gate is closed.

14. The system of any one of the preceding claims, comprising a balance or scale provided at said one or more access area (45) so as to determine the weight of a container placed on said access area (45), and wherein said data processing system (80) is preferably configured to prevent said crane from transporting said container if the determined weight of the container is higher than a predetermined threshold weight, and wherein said data processing system (80) is preferably configured to produce an alert if said determined weight of the container is higher that a predetermined threshold weight, and to preferably send the alert to a user associated with said container.

15. The system of claim14, wherein said data processing system (80) is configured to inform the individual user about the determined weight of the one or more containers (30) associated with the individual user.

## Patentansprüche

1. Ein Lagersystem (10) zur Bereitstellung von Lagerraum für Benutzer, wobei das System umfasst:
- ein Lagergebäude (20) mit einem Lagerbereich (40);
- eine Vielzahl standardisierter ISO 668-Container (30), die in dem genannten Lagergebäude auf dem genannten Lagerbereich (40) bereitgestellt sind, wobei jeder Container eine Container-Tür (35) aufweist; wobei die genannten Container gestapelt werden können, um Stapel (4) von Containern auf dem genannten Lagerbereich zu bilden, und wobei einem einzelnen Benutzer ein oder mehrere Container zugeordnet sind, die den Lagerraum dieses Benutzers enthalten;
wobei das genannte Lagergebäude ferner umfasst:
- ein oder mehrere Benutzerzugangstore (25), die einem einzelnen Benutzer den Zugang zu dem im Inneren eines Containers bereitgestellten Lagerraum ermöglichen;
- ein hinter jedem der genannten Benutzerzugangstore (25) angeordneter Zugangsbereich (45), ausreichend groß, um einen Container hinter dem jeweiligen Benutzerzugangstor (25) zu platzieren und einem einzelnen Benutzer den Zugang zu dem Lagerraum in diesem Container zu ermöglichen;
**dadurch gekennzeichnet, dass** das Lagergebäude (20) ferner umfasst:
- einen Ladebereich (60) in dem genannten Gebäude, wobei der genannte Ladebereich (60) geschlossen und vom genannten Lagerbereich (40) getrennt ist,
- ein Lkw-Zugangstor (65), ausreichend groß, um, wenn es geöffnet ist, einem Lkw, der einen Container transportiert, die Einfahrt in das genannte Gebäude und die Zufahrt zu dem genannten Ladebereich (60) zu ermöglichen;
- ein Kran (50) zum Erfassen eines bestimmten Containers an dessen Oberseite und zum Transport dieses Containers von einer Lagerposition in den Zugangsbereich (45), wobei der Kran (50) außerdem zum Stapeln von Containern (30) und zum Umpositionieren von Containern im gesamten Lagerbereich vorgesehen ist und zum Transport von Containern vom Ladebereich (60) in den genannten Lagerbereich (40) und umgekehrt;
wobei das Lagersystem (10) ferner umfasst:
- ein Datenverarbeitungssystem (80), ausgelegt, den genannten Kran automatisch antreiben zu können, um den genannten Container von einer Lagerposition zu einem Zugangsbereich zu transportieren; wobei das Datenverarbeitungssystem Folgendes umfasst:
- Benutzerprofile der genannten Benutzer, die Informationen über einen oder mehrere mit jedem einzelnen Benutzer assoziierte Container enthalten;
- eine Schnittstelle (75), die von einem einzelnen Benutzer über ein mobiles Gerät und/oder über das Internet aktiviert werden kann;
wobei das Datenverarbeitungssystem (80) so konfiguriert ist, mit dem einzelnen Benutzer über die Schnittstelle in gesicherter Weise zu interagieren, sodass der einzelne Benutzer ein Zugangsdatum und eine Uhrzeit festlegen kann um dem einzelnen Benutzer Zugang zum Lagerraum im dem Benutzer zugeordneten Container zu gewähren.

2. Das System gemäß Anspruch 1, wobei das Lagergebäude ein Basisniveau (21) aufweist, wobei der Zugangsbereich (45) auf dem genannten Basisniveau angeordnet ist, wobei ein oder mehrere Benutzerzugangstore (25) vorgesehen sind, um Zugang zu dem genannten Basisniveau (21) zu gewähren, und wobei die genannten ein oder mehrere Benutzerzugangstore (25) und der Zugangsbereich (4) so ausgeführt sind, dass ein einzelner Benutzer beim geöffneten Benutzerzugangstor über die Container-Tür (35) Zugang zum Inneren des auf dem Zugangsbereich (45) platzierten Containers erhält, wobei die genannten ein oder mehrere Benutzerzugangstore (25) dem Benutzer jedoch keinen weiteren Zugang zu dem Lagergebäude gewähren.

3. Das System gemäß Anspruch 1 oder Anspruch 2, wobei der Lagerbereich (40) und der Zugangsbereich (45) für Benutzer unzugänglich sind und vorzugsweise während des Betriebs des Systems vor dem Zutritt durch beliebige Personen geschützt sind.

4. Das System gemäß einem beliebigen der vorhergehenden Ansprüche, wobei die genannten ein oder mehrere Benutzerzugangstore (25) einen Motor und ein vom Motor gesteuertes Torblatt (26) umfassen, wobei das Datenverarbeitungssystem (80) vorgesehen ist, den Motor so zu steuern, dass das Torblatt (26) geöffnet und/oder geschlossen wird.

5. Das System gemäß einem beliebigen der vorhergehenden Ansprüche, wobei das Torblatt (26) als Schiebe- oder Lamellentor ausgeführt ist, so dass das Torblatt geöffnet werden kann, wenn der Container auf dem Zugangsbereich (45) in unmittelbarer Nähe des Benutzerzugangstors (25) platziert ist.

6. Das System gemäß einem beliebigen der vorstehenden Ansprüche, wobei besagte eine oder mehrere Benutzerzugangstore (25) eine Öffnung (27) bereitstellen, wenn ein Torblatt (26) des genannten Benutzerzugangstors geöffnet wird, wobei die Abmessung dieser Öffnung derart ist, dass der Abstand, der die Lücke zwischen einem Rand dieser Öffnung und einem auf dem Zugangsbereich (45) platzierten Container definiert, 15 cm oder kleiner, vorzugsweise 10 cm oder kleiner, und besonders bevorzugt 5 cm oder kleiner ist.

7. Das System gemäß einem beliebigen der vorstehenden Ansprüche, wobei besagter Kran (50) vorgesehen ist, um einen Container von einem Lieferwagen oder Lkw auf dem genannten Ladebereich (60) zum genannten Lagerbereich (40) zu transportieren, und vorzugsweise an eine Lagerposition in einem Stapel (4) von Containern zu transportieren.

8. Das System gemäß einem beliebigen der vorstehenden Ansprüche, wobei besagtes Lkw-Zugangstor (65) größer ist, als besagte eine oder mehrere Benutzerzugangstore (25).

9. Das System gemäß einem beliebigen der vorstehenden Ansprüche, wobei das genannte Lagergebäude (20) Stapel (4) aufweist, die drei oder mehr Container (30) umfassen, welche auf dem genannten Lagerbereich (40) übereinander gestapelt sind.

10. Das System gemäß einem beliebigen der vorstehenden Ansprüche, wobei die genannten Container an ihren oberen und/oder unteren Begrenzungen Ränder (31) aufweisen, wobei diese Ränder vorgesehen sind, um ein stabiles Stapeln der Container zu ermöglichen, und wobei die Container vorzugsweise an ihren oberen Begrenzungen obere Ränder (31) aufweisen, die es dem Kran ermöglichen, die Container an diesen oberen Rändern stabil zu greifen, um die Container anzuheben und zu transportieren.

11. Das System gemäß einem beliebigen der vorstehenden Ansprüche, wobei das genannte Datenverarbeitungssystem (80) einen Code enthält, der geeignet ist, ein Benutzerzugangstor (25) zu bestimmen und dieses Benutzerzugangstor zum geplanten Zugriffsdatum und zur geplanten Zugriffszeit zu öffnen, und wobei das Datenverarbeitungssystem (80) vorzugsweise einen Code enthält, der geeignet ist, den Kran so zu steuern, dass der dem jeweiligen Benutzer zugeordnete Container auf automatisierte Weise hinter dem bestimmten Benutzerzugangstor (25) zum oder vor dem geplanten Zugriffsdatum und der geplanten Zugriffszeit platziert wird.

12. Das System gemäß einem beliebigen der vorstehenden Ansprüche, wobei das Datenverarbeitungssystem (80) so konfiguriert ist, dass ein bestimmtes Benutzerzugangstor (25) nur geöffnet wird, wenn ein Container (30) hinter dem betreffenden Benutzerzugangstor auf dem Zugangsbereich (45) platziert ist.

13. Das System gemäß einem beliebigen der vorstehenden Ansprüche, wobei das Datenverarbeitungssystem (80) so konfiguriert ist, dass ein bestimmtes Benutzerzugangstor (25) nur geschlossen wird, wenn die Container-Tür (35) des auf dem Zugangsbereich (45) hinter dem betreffenden Benutzerzugangstor platzierten Containers geschlossen ist.

14. Das System gemäß einem beliebigen der vorstehenden Ansprüche, mit einer an einem oder mehreren der genannten Zugangsbereiche (45) bereitgestellten Waage, um das Gewicht eines auf dem Zugangsbereich (45) platzierten Containers zu bestimmen, wobei das Datenverarbeitungssystem (80) vorzugsweise so konfiguriert ist, dass es verhindert, dass der Kran den Container transportiert, wenn das ermittelte Gewicht des Containers höher als ein vorbestimmtes Schwellengewicht ist, und wobei das Datenverarbeitungssystem (80) vorzugsweise so konfiguriert ist, dass es eine Alarmmeldung erzeugt, wenn das ermittelte Gewicht des Containers höher als ein vorbestimmtes Schwellengewicht ist, und diese Alarmmeldung vorzugsweise dem Benutzer sendet, dem dieser Container zugeordnet ist.

15. Das System gemäß Anspruch 14, wobei das Datenverarbeitungssystem (80) so konfiguriert ist, dass es den jeweiligen Benutzer über das ermittelte Gewicht der dem jeweiligen Benutzer zugeordneten einen oder mehreren Container (30) informiert.

## Revendications

1. Un système de stockage (10) fournissant un espace de stockage à des utilisateurs, le système comprenant :
- un bâtiment de stockage (20) comprenant une zone de stockage (40) ;
- une pluralité de conteneurs d'expédition standard ISO 668 (30) fournis dans ledit bâtiment de stockage sur ladite zone de stockage (40), chaque conteneur disposant d'une porte du conteneur (35) ; lesdits conteneurs pouvant être empilés pour former des empilements (4) de conteneurs sur ladite zone de stockage, et un ou plusieurs conteneurs étant associés à un utilisateur individuel et contenant l'espace de stockage dudit utilisateur individuel ;
ledit bâtiment de stockage comprenant en outre :
- un ou plusieurs portails d'accès utilisateur (25) fournis pour permettre à un utilisateur individuel d'accéder à l'espace de stockage fourni à l'intérieur d'un conteneur ;
- une zone d'accès (45) prévue derrière chacun desdits portails d'accès utilisateur (25), suffisamment grande pour permettre qu'un conteneur soit placé derrière ledit portail d'accès utilisateur (25) et pour permettre à un utilisateur individuel d'accéder à l'espace de stockage dans ledit conteneur ;
**caractérisé en ce que** ledit bâtiment de stockage (20) comprend en outre :
- une zone de chargement (60) dans ledit bâtiment, ladite zone de chargement (60) étant clôturée et séparée de ladite zone de stockage (40),
- un portail d'accès pour camion (65), suffisamment grand pour permettre, lorsqu'il est ouvert, à un camion transportant un conteneur d'entrer dans ledit bâtiment et d'accéder à ladite zone de chargement (60) ;
- une grue (50) pour saisir un conteneur donné par le sommet dudit conteneur et pour transporter ledit conteneur depuis une position de stockage jusqu'à ladite zone d'accès (45), la grue (50) étant également prévue pour empiler des conteneurs (30) et pour repositionner des conteneurs dans l'ensemble de la zone de stockage, ainsi que pour transporter des conteneurs depuis la zone de chargement (60) vers ladite zone de stockage (40) et inversement ;
ledit système (10) comprenant :
- un système de traitement des données (80), configuré pour pouvoir actionner automatiquement ladite grue de manière à transporter ledit conteneur donné d'une position de stockage à une zone d'accès ; dans lequel ledit système de traitement des données comprend :
- les profils d'utilisateur desdits utilisateurs, comprenant des informations sur un ou plusieurs conteneurs associés à chaque utilisateur individuel ;
- une interface (75) pouvant être activée par un utilisateur individuel via un appareil mobile et/ou via Internet ;
dans lequel ledit système de traitement des données (80) est configuré pour interagir avec ledit utilisateur individuel via ladite interface de manière sécurisée afin de permettre à l'utilisateur individuel de programmer une date et une heure d'accès permettant à l'utilisateur individuel d'accéder à l'espace de stockage contenu dans un conteneur qui lui est associé.

2. Le système selon la revendication 1, dans lequel ledit bâtiment a un niveau de base (21), dans lequel ladite zone d'accès (45) est aménagée sur ledit niveau de base, dans lequel un ou plusieurs portails d'accès utilisateur (25) sont prévus pour donner accès au niveau de base (21), et dans lequel ledit ou lesdits portails d'accès utilisateur (25) et ladite zone d'accès (45) sont aménagés de façon à permettre à un utilisateur individuel d'accéder à l'intérieur du conteneur placé sur ladite zone d'accès (45) via la porte du conteneur (35) lorsque ledit portail d'accès utilisateur est ouvert, mais dans lequel ledit ou lesdits portails d'accès utilisateur (25) ne confèrent à l'utilisateur aucun autre accès au bâtiment.

3. Le système selon la revendication 1 ou la revendication 2, dans lequel ladite zone de stockage (40) et ladite zone d'accès (45) sont inaccessibles aux utilisateurs et de préférence protégées contre l'accès par toute personne pendant le fonctionnement du système.

4. Le système selon l'une quelconque des revendications précédentes, dans lequel ledit ou lesdits portails d'accès utilisateur (25) comprennent un moteur et une porte du portail (26) sous le contrôle dudit moteur, dans lequel ledit système de traitement des données (80) est prévu pour contrôler ledit moteur afin d'ouvrir et/ou fermer ladite porte du portail (26).

5. Le système selon l'une quelconque des revendications précédentes, dans lequel ladite porte du portail (26) est choisie parmi des portes coulissantes et des portes tambour, de façon à permettre l'ouverture de ladite porte du portail lorsque ledit conteneur est placé sur ladite zone d'accès (45) à proximité dudit portail d'accès utilisateur (25).

6. Le système selon l'une quelconque des revendications précédentes, dans lequel ledit ou lesdits portails d'accès utilisateur (25) fournissent une ouverture (27) lorsqu'une porte du portail (26) dudit portail d'accès utilisateur est ouverte, dans lequel la dimension de ladite ouverture est telle qu'une distance définissant un écart entre une bordure de ladite ouverture et un conteneur placé sur ladite zone d'accès est de 15 cm ou moins, de préférence 10 cm ou moins, encore de préférence 5 cm ou moins.

7. Le système selon l'une quelconque des revendications précédentes, dans lequel ladite grue (50) est prévue pour transporter un conteneur depuis une camionnette ou un camion sur ladite zone de chargement (60) vers ladite zone de stockage (40), et de préférence vers une position de stockage dans un empilement (4) de conteneurs.

8. Le système selon l'une quelconque des revendications précédentes, dans lequel le portail d'accès pour camion (65) est plus grand que le ou les portails d'accès utilisateur (25).

9. Le système selon l'une quelconque des revendications précédentes, dans lequel ledit bâtiment de stockage (20) comprend des empilements (4) comprenant trois conteneurs (30) ou plus empilés les uns sur les autres sur ladite zone de stockage (40).

10. Le système selon l'une quelconque des revendications précédentes, dans lequel lesdits conteneurs comprennent des rebords (31) sur les bordures supérieures et/ou inférieures desdits conteneurs, ces rebords étant prévus pour permettre un empilement stable desdits conteneurs, et dans lequel lesdits conteneurs comprennent de préférence des rebords supérieurs (31) sur les bordures supérieures desdits conteneurs, ces rebords supérieurs étant prévus pour permettre à ladite grue de saisir de manière stable lesdits conteneurs par leurs rebords supérieurs afin de soulever et de transporter lesdits conteneurs.

11. Le système selon l'une quelconque des revendications précédentes, dans lequel ledit système de traitement des données (80) comprend un code apte à déterminer un portail d'accès utilisateur (25) et à ouvrir ledit portail d'accès utilisateur à la date et à l'heure d'accès programmées, et dans lequel ledit système de traitement des données (80) comprend de préférence un code apte à commander ladite grue afin de placer, de manière automatisée, le conteneur associé à l'utilisateur individuel derrière ledit portail d'accès utilisateur (25) à ou avant la date et l'heure d'accès programmées.

12. Le système selon l'une quelconque des revendications précédentes, dans lequel ledit système de traitement des données (80) est configuré pour n'ouvrir un portail d'accès utilisateur donné (25) qu'une fois qu'un conteneur (30) est placé sur ladite zone d'accès (45) derrière ledit portail d'accès utilisateur donné.

13. Le système selon l'une quelconque des revendications précédentes, dans lequel ledit système de traitement des données (80) est configuré pour fermer un portail d'accès utilisateur donné (25) uniquement si la porte du conteneur (35) du conteneur placé sur ladite zone d'accès (45) derrière ledit portail d'accès utilisateur donné est fermée.

14. Le système selon l'une quelconque des revendications précédentes, comprenant une balance ou un peson disposé à ladite ou à l'une quelconque desdites zones d'accès (45) afin de déterminer le poids d'un conteneur placé sur ladite zone d'accès (45), et dans lequel ledit système de traitement des données (80) est de préférence configuré pour empêcher ladite grue de transporter ledit conteneur si le poids déterminé du conteneur est supérieur à un poids seuil prédéterminé, et dans lequel ledit système de traitement des données (80) est de préférence configuré pour générer une alerte si le poids déterminé du conteneur est supérieur à un poids seuil prédéterminé, et, de préférence, pour envoyer l'alerte à un utilisateur associé au conteneur.

15. Le système de la revendication 14, dans lequel ledit système de traitement des données (80) est configuré pour informer l'utilisateur individuel du poids déterminé de l'un ou de plusieurs conteneurs (30) associés à l'utilisateur individuel.
